# EUROPÄISCHE PATENTSCHRIFT

(11) **EP 1 293 412 B1**
(45) Veröffentlichungstag und Bekanntmachung des Hinweises auf die Patenterteilung: **21.06.2006**
(21) Anmeldenummer: 02017338.1
(22) Anmeldetag: 02.08.2002
(51) Int. Cl.: B62D 6/00, B62D 101/00, B62D 103/00, B62D 105/00, B62D 111/00

(54) **Verfahren zum Kompensieren eines beim Bremsen auftretenden Giermoments**
Method for compensating a yaw moment appearing during braking
Méthode de compensation d'un moment de lacet apparaissant lors d'un freinage

(30) Priorität: 14.09.2001 DE 10145303
(43) Veröffentlichungstag der Anmeldung: 19.03.2003
(73) Patentinhaber: Bayerische Motoren Werke Aktiengesellschaft, 80809 München (DE)
(72) Erfinder: Barz, Michael, 85258 Ebersbach (DE)

(56) Entgegenhaltungen:
- WO-A-02/34599
- DE-A- 4 038 079
- DE-A- 4 041 404
- DE-A- 4 200 061
- DE-A- 4 405 379
- DE-C- 4 123 235

## Beschreibung

Die Erfindung betrifft ein Verfahren zum Kompensieren eines Giermoments, das beim Bremsen eines mit einem Antiblockierregler ausgerüsteten Fahrzeugs mit Einzelradregelung wenigstens an einer Achse bei unterschiedlichen Reibwerten auf den beiden Fahrzeugseiten auftritt, gemäß dem Oberbegriff des Anspruchs 1.

Aus DE-40 38 079 ist ein mit einem Antiblockierregler ausgerüstetes Kraftfahrzeug mit Einzelradregelung wenigstens an einer Achse bekannt, bei dem das bei unterschiedlichem Fahrbahnreibbeiwert µ auf den beiden Fahrzeugseiten bei ABS-Regelung auftretende Giermoment zumindest teilweise dadurch kompensiert wird, dass ein von der Differenz ΔP der getrennt eingeregelten Bremsdrücke abhängiger Kompensationslenkwinkel δ am Hinterradlenksystem eingestellt, bzw. dem Vorderrad- oder Hinterradlenkwinkel überlagert wird, wobei die Abhängigkeit des Lenkwinkels δ von der Differenz ΔP in einem vorgegebenen Bereich kleiner Bremsdruckdifferenzen 0 ist (Totzone) und danach auf einen vorgegebenen Wert anwächst, wobei die Regelverstärkung jeweils nach Überschreiten der Totzone einen vorgegebenen konstanten Wert annimmt und zum Zeitpunkt des Überschreitens der Totzone der konstanten Reglerverstärkung ein vorgegebener höherer Wert additiv überlagert wird, der nach einer vorgegebenen Zeitfunktion auf Null erniedrigt wird.

Aus der WO 02/34599 A1, die als nächstkommender, nicht vorveröffentlichter Stand der Technik betrachtet werden kann, ist es bekannt, diesen Kompensationslenkwinkel oder Zusatzlenkwinkel zu korrigieren oder zu modifizieren. Dabei wird ein Eingriff eines sog. Giermomentenkompensators in das Lenksystem nicht oder nur verringert zugelassen, während mittels eines sog. Fahrzeugreglers oder Fahrdynamikreglers, bei welchem es sich um ein grundsätzlich bekanntes "ESP" (=Electronic Stability Program) handelt, Bremskräfte an den Rädern eingestellt werden.

Weiterhin beschreibt die DE 44 05 379 A1 eine Korrekturfaktor-Bestimmung für eine Hinterachslenkung aus einem Bremsschlupf, wobei die Ausgangswerte oder Variationswerte des Bremsreglers mit Hilfe der Fuzzy-Logik ermittelt werden.

Im bekannten Stand der Technik werden die beim Bremsen auf inhomogenen Fahrbahnen (unterschiedlicher Reibwert auf linker und rechter Fahrzeugseite, sog. p-split) auftretenden Giermomente durch automatische Eingriffe in die Lenkung der Vorder- oder Hinterachse kompensiert. In Abhängigkeit von der gemessenen oder geschätzten Bremsdruckdifferenz zwischen einem linkem und einem rechtem Rad wird ein in einem Kennfeld festgelegter Korrekturlenkwinkel an der Vorder- oder Hinterachse eingestellt. Die dabei erreichte Kompensation ist jedoch sehr stark von der Kraftschlussausnutzung am gelenkten Rad mit dem höheren Fahrbahnreibwert abhängig. Wird die Kompensation so eingestellt, dass sie bei einer an beiden gelenkten Rädern (links und rechts) vorliegenden ABS-Regelung optimale ist, kommt es beim Betätigen und Lösen der Bremse zu einer impulsartigen und für den Fahrer unerwarteten Überkompensation des Giermomentes. Diese Überkompensation tritt auch stationär auf, wenn eine entsprechende Bremsverzögerung eingestellt wird.

Aufgabe der vorliegenden Erfindung ist es, eine für alle Fahrbahnreibwerte und Bremsverzögerungen gleichbleibende Kompensation des Giermoments beim Bremsen zu erreichen und auch bei Änderungen des Bremsschlupfes einen stabilen Fahrzustand sicherzustellen.
Diese Aufgabe wird gelöst durch ein Verfahren nach Anspruch 1.

Auf Grundlage der über die ABS-Raddrehzahlsensoren ermittelten Radumfangsgeschwindigkeiten und einer Fahrzeugreferenzgeschwindigkeit wird der Bremsschlupf am für die Kompensation genutzten Hochreibwertrad errechnet und daraus über eine Kennlinie ein Korrekturfaktor ermittelt. Der aus einem Kennfeld ermittelte Kompensationslenkwinkel wird mit diesem Korrekturfaktor multipliziert, so dass sich der an den gelenkten Rädern einzustellende modifizierte Kompensationslenkwinkel ergibt. Dabei strebt der multiplikative Korrekturfaktor bei großen Bremsschlupfwerten gegen einen vorgegebenen Grenzwert. Dieser nimmt den Wert "1" an, wenn das Rad mit einem hohen Reibwert antiblockiergeregelt wird und große Bremsschlupfwerte vorliegen, so dass dann keine Modifizierung des Zusatzlenkwinkels (δ) stattfindet. Hingegen ist der Korrekturfaktor kleiner als "1", wenn am Rad mit einem höheren Reibwert geringerer Bremsschlupf auftritt, wobei im Extremfall bei kleinem Bremsschlupf der Korrekturfaktor den Wert "0" annimmt und der modifizierte Zusatzlenkwinkel somit ebenfalls den Wert "0" hat.

Besonders bevorzugt wird der Korrekturfaktor (k) durch ein Tiefpassfilter gefiltert. Das Ermitteln des Korrekturfaktors aus dem Bremsschlupf kann insbesondere über eine vorher abgespeicherte Kennlinie erfolgen.

Ein Vorteil der Erfindung besteht darin, dass sie weitgehend kostenneutral ist, da nur ABS-Raddrehzahlsensoren benötigt werden, die i.a. zum Serienumfang bei heutigen Fahrzeugen gehören.

Weitere Merkmale und Vorteile der Erfindung ergeben sich aus der folgenden Beschreibung von bevorzugten Ausführungsformen, bei der Bezug genommen wird auf die beigefügten Zeichnungen.
Fig. 1 zeigt ein Brems-/Lenksystem, bei dem eine Ausführungsform des erfindungsgemäßen Verfahrens anwendbar ist.
Fig. 2 zeigt einen möglichen Verlauf des Korrekturfaktors gegenüber dem ermittelten Bremsschlupf am Hochreibwertrad.

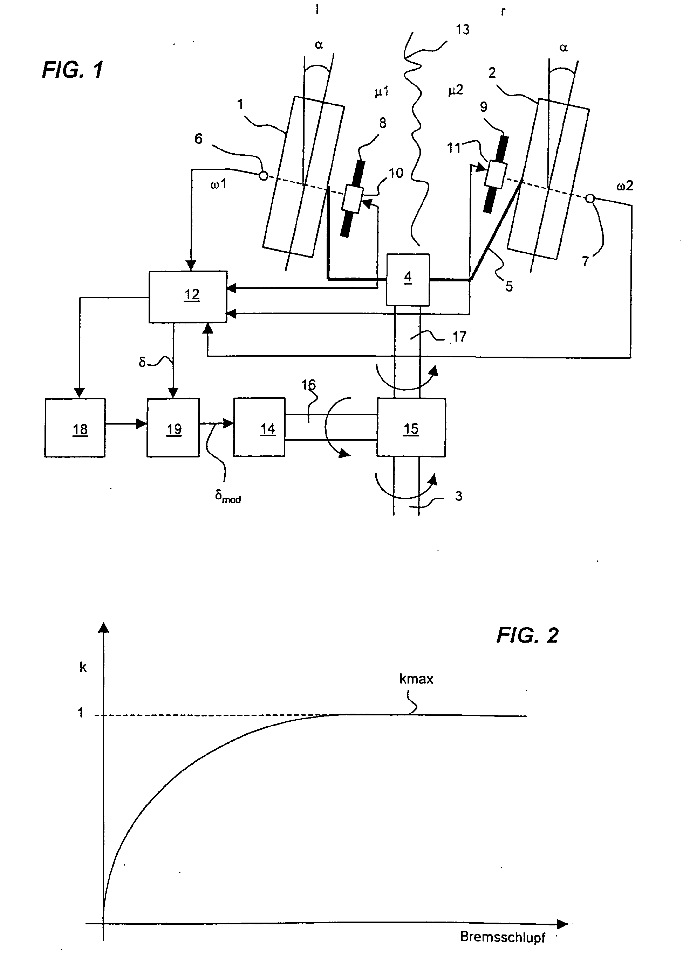

Das Brems-/ Lenksystem in Fig. 1 zeigt zwei gelenkte Räder 1 und 2 eines Kraftfahrzeugs auf einer Fahrbahn. Gelenkt werden beide Räder über eine Lenkspindel 3, deren Bewegung über ein Lenkgetriebe 4 und über Lenkhebel 5 auf die Räder übertragen wird. Die Drehzahl ω1 und ω2 der gezeigten Räder 1 bzw. 2 wird jeweils über einen Drehzahlsensor 6 links und einen Drehzahlsensor 7 rechts erfasst.

Die Bremsung der Räder erfolgt unabhängig voneinander jeweils über eine mit den Rädern fest verbundene Bremsscheibe 8 links bzw. Bremsscheibe 9 rechts. Auf die Bremsscheibe wirkt ein Bremszylinder 10 bzw. 11, jeweils mit einem integrierten Drucksensor.

Die Drehzahl der Räder von den Drehzahlsensoren 6 und 7 sowie der Druck in den Bremszylindern von den Drucksensoren 10 und 11 wird an eine zentrale Steuereinheit 12 gemeldet. Die Steuereinheit 12 dient bei einer Antiblockierregelung auch dazu, den Druckaufbau in dem jeweiligen Bremszylinder über (nicht dargestellte) Druckventile zu unterbrechen, sobald der Schlupf über einen vorgegebenen Schwellenwert zunimmt und das Rad keine zusätzliche Kraft mehr auf die Fahrbahn übertragen kann.

Bei Geradeausfahrt auf einer Fahrbahn mit unterschiedlichen Reibwerten rechts und links wirken auf beiden Seiten des Fahrzeugs unterschiedliche Bremskräfte, was zu einem Giermoment um die Fahrzeughochachse führt. Das bedeutet, dass das Fahrzeug eine Kurve fährt, die zur Fahrbahnseite hin gebogen ist, die einen höheren Reibwert aufweist, in Fig. 1 ist dies der Bereich *µ*1 links von der Grenzlinie 13. Dieser Giermomentaufbau wird im Stand der Technik dadurch verhindert oder zumindest verzögert, dass aus einer Bremsdruckdifferenz zwischen den Bremsdrücken in den Zylindern 10 und 11 der Räder 1 und 2 auf den beiden Fahrzeugseiten I und r ein Zusatzlenkwinkel δ ermittelt wird. Der Zusatzlenkwinkel δ wird mit Hilfe eines Aktuators 14 und eines Überlagerungsgetriebes 15 sowie einer Aktuatorspindel 16 zwischen beiden der Lenkbewegung der Lenkspindel 3 überlagert. Die überlagerte Drehbewegung wird über eine übertragungspindel 17 an das Lenkgetriebe 4 übertragen. (Die Spindeln sind als Doppelstriche, ihre Drehbewegung als gebogener Pfeil dargestellt.) Die Bewegung ist gegenläufig zu dem Giermoment, das durch die unterschiedliche Bremskraft auf beiden Fahrzeugseiten hervorgerufen wird, in Fig. 1 wird durch den Aktuator 14 also eine Lenkung nach rechts bewirkt, wie durch den Winkel 6 dargestellt.

Dies Verfahren zum Kompensieren eines Giermoments führt dann zu abrupten und unerwünschten Reaktionen des Fahrzeugs, wenn z.B. sich der höhere Reibwert µ1 plötzlich weiter erhöht, beispielsweise bei Fahrt auf einer nassen Fahrbahn links, die in eine trockene Fahrbahn übergeht, während die rechte Fahrbahn durchgehend schneebedeckt ist. Sobald sich der hohe Reibwert ändert, kann sich bei konstanter Bremskraft der Bremsschlupf und damit die Seitenkraft ändern, so daß sich eine Abweichung vom gewünschten Kurs ergibt. Ursprünglich sollte dagegen mit dem Lenkwinkel des Aktuators 14 nur das durch das Bremsen hervorgerufene Giermoment kompensiert werden. Bedingt ist dieses Verhalten dadurch, dass durch die Änderung des Fahrbahnreibwertes an dem Hochreibwertrad bzw. den Hochreibwerträdern der Bremsschlupf abnimmt und bei gleichem Schräglaufwinkel des Rades mehr Seitenkraft erzeugt wird (Kammscher Kreis). Entsprechendes gilt bei langsamer Betätigung der Bremse, wenn der Bremsschlupf zunächst niedrig ist, oder beim Lösen der Bremse.

Ein Brems-/Lenksystem, bei dem das erfindungsgemäße Verfahren zur Verhinderung von abrupten und unerwünschten Fahrzeugbewegungen bei der Kompensation von Bremsgiermomenten implementiert werden kann, umfasst zusätzlich zu den oben beschriebenen Elementen einen Kennlinienspeicher 18 und eine Verknüpfungsvorrichtung 19. An den beiden gelenkten Rädern 1 und 2 auf den beiden Fahrzeugseiten wird der jeweilige Bremsschlupf in Abhängigkeit von der Radumfangsgeschwindigkeit und der Fahrzeugreferenzgeschwindigkeit ermittelt. Damit ist das System im weiteren unabhängig von Änderungen der Fahrbahnreibwerte und damit der Kraftschlußausnutzung an den gelenkten Rädern.

Nachdem bestimmt worden ist, welches der zwei Räder 1 und 2 in Fig. 1 einen höheren Reibwert µ1 aufweist, wird ein Korrekturfaktor k aus dem Bremsschlupf für das Rad 1 mit dem höheren Fahrbahnreibwert bestimmt. Dies erfolgt über eine vorher in dem Kennlinienspeicher 18 abgespeicherte Kennlinie. Der Korrekturfaktor k wird mit dem Zusatzlenkwinkel δ, der wie im Stand der Technik ermittelt wurde, in der Verknüpfungsvorrichtung 19 verknüpft, und zwar durch Multiplikation. Somit erhält man aus dem Zusatzlenkwinkel δ einen modifizierten Zusatzlenkwinkel δ_{mod}, der an den Aktuator 14 ausgegeben wird.

Bei der angegebenen multiplikativen Verknüpfung strebt der Korrekturfaktor k bei großen Bremsschlupfwerten gegen einen vorgegebenen Grenzwert kmax. Bei kleinen Bremsschlupfwerten geht er dagegen gegen null, d.h. bei großem Bremsschlupf findet keine Modifizierung des durch den Aktuator 14 nach Stand der Technik eingestellten Zusatzlenkwinkels δ statt. Bei kleinem Bremsschlupf dagegen wird der Zusatzlenkwinkel δ im Extremfall ganz aufgehoben, und der modifizierte Zusatzlenkwinkel δ_{mod} hat dementsprechend den Wert null.

Das erfindungsgemäße Verfahren kann auch eingesetzt werden, wenn das Hochreibwertrad noch nicht an seiner Grenze bei der Übertragung von Kräften auf die Fahrbahn angelangt ist. In diesem Fall findet noch keine Antiblockierregelung an dem Rad statt. Aufgrund der Bremsdruckdifferenz zwischen den beiden Bremszylindern 10 und 11 wird jedoch bereits "gegengesteuert", d.h. es wird ein Zusatzlenkwinkel δ dem vom Fahrer vorgegebenen Lenkwinkel überlagert. Bei einem plötzlichen Übergang von einem ersten relativ hohen µ1 zu einem niedrigeren *µ*1 kann wiederum der Fall eintreten, dass eine Antiblockierregelung an dem Rad erforderlich wird.

Um bei einer derartigen Fahrsituation (unterhalb der Antiblockierregelung) rechtzeitig reagieren zu können, wird bei einer bevorzugten Ausführungsform der Erfindung der Grenzwert kmax für große Bremsschlupfwerte kleiner als eins gewählt. D.h. es werden nur zwei Zustände des Hochreibwertrades unterschieden, nämlich ob das Rad antiblockiergeregelt wird oder nicht. Ob das Rad antiblockiergeregelt wird, ist an einem Logikflag der Antiblockierregelung ablesbar oder kann auch durch Vergleich der Bremsdrücke des (nicht dargestellten) Hauptbremszylinders und der Radbremszylinder 10 und 11 ermittelt werden. Wenn in der Fahrsituation das Rad bereits antiblockiergeregelt wird, ist der Grenzwert kmax des Korrekturfaktors k für große Bremsschlupfwerte eins. Anderenfalls, d.h. das Rad wird noch nicht antiblockiergeregelt, wird ein kleinerer Grenzwert kmax unter eins eingestellt.

Um einen harmonischeren Übergang zu schaffen, wird der Korrekturfaktor vorzugsweise über einen Tiefpassfilter gefiltert.

Mit dem erfindungsgemäßen Verfahren erfolgt die Kompensation des Giermomentes beim Bremsen auf µ-split Fahrbahnen bei allen Verzögerungen und Fahrbahnreibwerten erheblich gleichmäßiger. Die sehr störenden und unerwarteten Änderungen der Kompensation bei Änderung der Bremspedalstellung oder Veränderungen des Fahrbahnreibwertes entfallen.

Die Erfindung wurde oben bei Bremsmanövem auf Fahrbahnen mit unterschiedlichen Reibwerten beschrieben, es ist dem Fachmann jedoch klar, dass der Korrekturfaktor auch bei anderen, über eine Steuerung realisierten Störungskompensationen wie z.B. Seitenwindkompensation (Seitenwind bei gleichzeitigem Bremsen), Kompensation des Eindreheffektes beim Bremsen in Kurven (auch auf unterschiedlichen Fahrbahnreibwerten rechts/links) zu einer Verbesserung der Kompensation eingesetzt werden kann.

Bei der Beschreibung der bevorzugten Ausführungsform der Erfindung wurde von einem Bremssystem ausgegangen, bei dem in den Bremszylindern der Räder ein Druck erzeugt wird. Dem Fachmann ist jedoch klar, dass die Erfindung auch auf Bremssysteme mit elektromechanischer Krafterzeugung angewendet werden kann. Ferner kann die Erfindung statt auf eine Lenkung mit mechanischer Kraftübertragung auch auf elektrische Lenkanlagen und statt auf eine Zweiradlenkung auch auf eine Vierradlenkung angewendet werden.

Eine besonders effektive Art der Bestimmung des Korrekturfaktors ist die beschriebene Ermittlung des Korrekturfaktors aus einer vorher abgespeicherten Kennlinie. Es ist aber auch denkbar, dass statt einer Kennlinie das Verhalten des Bremsschlupfes modelliert wird - gegebenenfalls unter Berücksichtigung weiterer Messgrößen wie Reifendruck etc. - und der Korrekturfaktor aus einem entsprechenden Modell errechnet wird.

### Bezugszeichen

- 1: linkes Fahrzeugrad
- 2: rechtes Fahrzeugrad
- 3: Lenkradlenkspindel
- 4: Lenkgetriebe
- 5: Lenkhebel
- 6: linker Drehsensor
- 7: rechter Drehsensor
- 8: linke Bremsscheibe
- 9: rechte Bremsscheibe
- 10: linker Bremszylinder mit Drucksensor
- 11: rechter Bremszylinder mit Drucksensor
- 12: zentrale Steuereinheit
- 13: Grenze zwischen Gebiet µ1 und Gebiet µ2
- 14: Aktuator
- 15: Überlagerungsgetriebe
- 16: Aktuatorspindel
- 17: Übertragungsspindel
- 18: Kennlinienspeicher
- 19: Verknüpfungsvorrichtung
Reibwerten (µ1, µ2)
Fahrzeugseiten (l, r)
Radumfangsgeschwindigkeit (vU)
Fahrzeugreferenzgeschwindigkeit (v0) daraus,
Zusatzlenkwinkels (δ)
Bremsdruckdifferenz (ΔP)
Bremsdrücken der Räder ()
Korrekturfaktors (k)
vorher abgespeicherte Kennlinie

## Patentansprüche

1. Verfahren zum Kompensieren eines Giermoments, das beim Bremsen eines mit einem Antiblockierregler ausgerüsteten Fahrzeugs mit Einzelradregelung wenigstens an einer Achse bei unterschiedlichen Reibwerten (µ1, µ2) auf den beiden Fahrzeugseiten (I, r) auftritt, mit den Schritten:
a) Erfassen einer Radumfangsgeschwindigkeit bei wenigstens einem Rad (1, 2) auf den beiden Fahrzeugseiten (l, r) durch einen Raddrehzahlsensor (6, 7) und Ermitteln einer Fahrzeugreferenzgeschwindigkeit daraus,
b) Ermitteln eines Zusatzlenkwinkels (δ) in Abhängigkeit von einer Bremsdruckdifferenz (ΔP) zwischen den Bremsdrücken der Räder (1, 2) auf den beiden Fahrzeugseiten (l, r) und Bestimmen eines modifizierten Zusatzlenkwinkels (δ_{mod}) hieraus, und
c) Einstellen des modifizierten Zusatzlenkwinkels (δ_{mod}) an wenigstens einem der zwei gelenkten Räder (1, 2) des Fahrzeugs,
wobei ein Bremsschlupf an dem wenigstens einen gelenkten Rad (1, 2) auf den beiden Fahrzeugseiten (l, r) in Abhängigkeit von der Radumfangsgeschwindigkeit und der Fahrzeugreferenzgeschwindigkeit ermittelt wird, um das auf das Fahrzeug wirkende Giermoment gleichmäßig zu kompensieren,
wobei aus dem Bremsschlupf für das wenigstens eine gelenkte Rad (1,2), das einen höheren Reibwert (µ1) aufweist, ein Korrekturfaktor (k) ermittelt und über diesen Korrekturfaktor (k) durch multiplikative Verknüpfung mit dem Zusatzlenkwinkel (6) der modifizierte Zusatzlenkwinkel (δ_{mod}) bestimmt wird, wobei der Korrekturfaktor (k) bei großen Bremsschlupfwerten gegen einen vorgegebenen Grenzwert (kmax) strebt und dieser Grenzwert (kmax) vom Wert "1" ist, wenn das Rad (1, 2) mit einem hohen Reibwert (µ1) antiblockiergeregelt wird, während dieser Grenzwert (kmax) kleiner als eins ist, wenn das Rad (1, 2) mit einem hohen Reibwert (µ1) nicht antiblockiergeregelt wird, so dass bei großen Bremsschlupfwerten und antiblockiergeregeltem Rad keine Modifizierung des Zusatzlenkwinkels (δ) stattfindet, während der Korrekturfaktor (k) kleiner als "1" ist, wenn am Rad (1, 2) mit einem höheren Reibwert (*µ*1) geringerer Bremsschlupf auftritt und wobei im Extremfall bei kleinem Bremsschlupf der Korrekturfaktor (k) den Wert "0" annimmt und der modifizierte Zusatzlenkwinkel (δ_{mod}) somit ebenfalls den Wert "0" hat.

2. Verfahren nach Anspruch 1,
**dadurch gekennzeichnet, dass** der Korrekturfaktor (k) durch ein Tiefpassfilter gefiltert wird.

3. Verfahren nach einem der vorangehenden Ansprüche,
**dadurch gekennzeichnet, dass** das Ermitteln des Korrekturfaktors (k) aus dem Bremsschlupf über eine vorher abgespeicherte Kennlinie erfolgt.

## Claims

1. A method of compensating a yawing moment occurring when braking a vehicle equipped with an antilock controller with individual wheel control on at least one axle when there is a difference between the friction coefficients (µ1, µ2) on the two sides (l, r) of the vehicle, with the steps:
a) detecting a peripheral speed of at least one wheel on each side (1, r) of the vehicle, using a wheel speed sensor (6, 7), and determining a reference vehicle speed therefrom,
b) determining an additional steering angle (δ) in dependence on a difference (ΔP) between the brake pressures of the wheels (1, 2) on the two sides (1, r) of the vehicle and determining a modified additional steering angle (δ_{mod}) therefrom, and
c) setting the modified additional steering angle (δ_{mod}) at at least one of the two steered wheels (1, 2) of the vehicle,
wherein a slip at the at least one steered wheel (1, 2) on either of the two sides (1, r) of the vehicle is determined in dependence on the peripheral wheel speed and the reference speed of the vehicle, in order uniformly to compensate the yawing moment acting on the vehicle,
wherein the slip of the at least one steered wheel (1, 2) having a higher friction coefficient (µ1) is used to calculate a corrective factor (k) which is linked by multiplication to the additional steering angle (δ) in order to determine the modified additional steering angle (δ_{mod}), wherein at high wheel slip the corrective factor (k) tends towards a set limiting value (kmax) and the said limiting value (kmax) is unity if the wheel (1, 2) having the high friction coefficient (µ1) is antilock-controlled, whereas the said limiting value (kmax) is below unity if the wheel (1, 2) with the high friction coefficient (µ1) is not antilock-controlled, so that at high wheel slip and with an antilock-controlled wheel, no modification is made in the additional steering angle (δ) as long as the corrective factor (k) is below unity if the slip of the wheel (1, 2) with the higher friction coefficient (µ1) is smaller, and wherein in the extreme case at low wheel slip the corrective factor (k) takes the value zero and the modified additional steering angle (δ_{mod}) is consequently also zero.

2. A method according to claim 1, **characterised in that** the corrective factor (k) is filtered through a low-pass filter.

3. A method according to any of the preceding claims, **characterised in that** the corrective factor (k) is determined from the wheel slip via a previously stored characteristic.

## Revendications

1. Procédé de compensation d'un couple de lacet, apparaissant lors du freinage d'un véhicule équipé d'un régulateur antiblocage avec régulation indépendante au moins au niveau d'un essieu, pour des coefficients de frottement (µ1, µ2) différents des deux côtés (1, r) du véhicule, comprenant les étapes suivantes :
a) enregistrement d'une vitesse périphérique de roue pour au moins une roue (1, 2) sur les deux côtés du véhicule (1, r) par un capteur de vitesse de rotation de roue (6, 7) et détermination, à partir de celle-ci, d'une vitesse de référence du véhicule,
b) détermination d'un angle de braquage supplémentaire (δ) en fonction d'une différence de pression de freinage (ΔP) entre les pressions de freinage des roues (1, 2) des deux côtés du véhicule (1, r) et détermination d'un angle de braquage supplémentaire modifié (δ_{mod}) à partir de celui-ci, et
c) réglage de l'angle de braquage supplémentaire modifié (δ_{mod}) au niveau d'au moins l'une des deux roues dirigées (1, 2) du véhicule, un glissement au freinage au niveau de la (au moins une) roue dirigée (1, 2) des deux côtés du véhicule (1, r) étant déterminé en fonction de la vitesse périphérique de roue et de la vitesse de référence du véhicule, afin de compenser de manière homogène le couple de lacet agissant sur le véhicule,
selon lequel on détermine à partir du glissement au freinage pour la roue dirigée (1, 2) un facteur de correction (k) qui présente un coefficient de frottement plus élevé (µ1), et on calcule l'angle de braquage supplémentaire modifié (δ_{mod}) en multipliant ce facteur de correction (k) par l'angle de braquage supplémentaire (δ), le facteur de correction (k), pour des valeurs de glissement au freinage élevées, tendant vers une valeur limite prédéterminée (kmax) et cette valeur limite (kmax) étant égale à la valeur « 1 » lorsque la roue (1, 2) à coefficient de frottement élevé (µ1) fait l'objet d'une régulation antiblocage, tandis que cette valeur limite (kmax) est inférieure à un lorsque la roue (1, 2) à coefficient de frottement élevé (µ1) ne fait pas l'objet d'une régulation antiblocage, de telle sorte que dans le cas de valeurs de glissement au freinage élevées et d'une roue faisant l'objet d'une régulation antiblocage, aucune modification de l'angle de braquage supplémentaire (δ) ne se produit, tandis que le facteur de correction (k) est inférieur à « 1 » lorsque au niveau de la roue (1, 2) à coefficient de frottement élevé (µ1) le glissement au freinage est plus faible, le facteur de correction (k) prenant la valeur « 0 » dans le cas extrême en cas de faible glissement au freinage, et l'angle de braquage supplémentaire modifié (δ_{mod}) ayant ainsi également la valeur « 0 ».

2. Procédé selon la revendication 1,
**caractérisé en ce que**
le facteur de correction (k) est filtré par un filtre passe-bas.

3. Procédé selon l'une des revendications précédentes,
**caractérisé en ce qu'**
on détermine le facteur de correction (k) à partir du glissement au freinage par une courbe caractéristique enregistrée au préalable.
